# NOUVEAU FASCICULE DE BREVET EUROPEEN

(11) **EP 0 757 774 B2**
(45) Date de publication et mention de la décision concernant l'opposition: **16.06.2004**
(45) Mention de la délivrance du brevet: 16.08.2000
(21) Numéro de dépôt: 95918652.9
(22) Date de dépôt: 28.04.1995
(51) Int. Cl.: F23G 5/00, F23J 15/00, B01D 53/34

(54) **PERFECTIONNEMENT AUX PROCEDES DE TRAITEMENT THERMIQUE DES RESIDUS D'EPURATION DES FUMEES ET DES RESIDUS DU PROCESSUS INDUSTRIEL EMETTANT CES FUMEES**
VERFAHREN ZUR WÄRMEBEHANDLUNG VON RÜCKSTÄNDEN AUS DER ABGASREINIGUNG UND VON RÜCKSTÄNDEN AUS DEM INDUSTRIELLEN PROZESS DER DIESES ABGAS FREISETZT
IMPROVEMENTS TO METHODS FOR HEAT TREATING FLUE GAS CLEANING RESIDUES AND RESIDUES FROM THE INDUSTRIAL PROCESS GENERATING SAID FLUE GASES

(30) Priorité: 28.04.1994 FR 9405418
(43) Date de publication de la demande: 12.02.1997
(73) Titulaire: LAB S.A., 69003 Lyon (FR)
(72) Inventeur: VICARD, Jean-François, F-69002 Lyon (FR); GOURMELON, Fabrice, Yves, François, Arnaud, F-69003 Lyon (FR)
(74) Mandataire: Myon, Gérard Jean-Pierre
(86) Numéro de dépôt international: PCT/FR1995/000555
(87) Numéro de publication internationale: WO 1995/030112

(56) Documents cités:
- EP-A- 0 381 601
- WO-A-90/11817
- WO-A-90/14559
- DE-A- 3 827 086
- DE-A- 3 923 795
- FR-A- 2 547 210
- FR-A- 2 696 955
- US-A- 4 859 440
- Teller, A.J./Quimby, J.M.: MERCURY REMOVAL FROM INCINERATION FLUE GAS, presented at the 84th Annual Meeting of Air & Waste Management Association in Vancouver, June 16-21,1991

## Description

### DOMAINE DE L'INVENTION

La présente invention se réfère aux processus industriels émettant des fumées qui doivent être épurées avant rejet à l'atmosphère et des résidus qui doivent le plus souvent être traités avant valorisation ou mise en décharge. La présente invention se réfère plus particulièrement aux processus mettant en oeuvre une combustion et dont les résidus, y compris ceux provenant de l'épuration des fumées de combustion sont traités par voie thermique.

### ETAT DE L'ART

Un processus industriel mettant en oeuvre une combustion, par exemple une combustion de combustibles solides et/ou liquides, engendre des fumées dans lesquelles les impuretés du combustible sont portées à haute température. Ces impuretés et une partie, en général faible, de la matière combustible sont alors soit volatilisées et entraînées avec les fumées, soit entraînées avec les fumées sous forme de particules fines, soit évacuées de la zone de combustion sous forme de particules de taille importante résultant le plus souvent d'une fusion partielle suivie d'une agglomération et appelée en général mâchefer. La volatilisation de ces impuretés est d'autant plus importante que la température est plus élevée tandis que la quantité de matière combustible volatilisée, dite imbrûlés, est d'autant plus faible que la qualité de combustion est meilleure. Lors du refroidissement des fumées les éléments volatilisés qui ne restent pas sous forme gazeuse sont recombinés et/ou condensés soit sous forme de nouvelles particules fines, soit à la surface des particules fines en suspension dans les fumées soit enfin sous forme de dépôts sur les surfaces de refroidissement d'une chaudière, ces dépôts étant le plus souvent reentraînés sous forme de particules dans les fumées lors des ramonages. Un phénomène analogue de recombinaison/condensation se produit aussi lors de la formation et du refroidissement des mâchefers. Après refroidissement les fumées chargées en poussières et en polluants gazeux sont épurées et les résidus qui en résultent sont soit mélangés soit séparés en cendres volantes, gâteau de filtration ... etc. Pour que ces résidus soient d'une qualité suffisante en vue de leur valorisation ou de leur mise en décharge, on peut utiliser un combustible ayant très peu d'impuretés. Mais ce type de combustible est coûteux et n'est pas toujours disponible. Il y a un avantage de plus en plus important en terme de coût à utiliser un combustible contenant des impuretés. Et dans le cas de l'incinération des déchets, à la fonction de production/récupération d'énergie s'ajoute la fonction de traitement des déchets en vue de valorisation matière ou d'immobilisation des polluants tels que les métaux lourds. C'est pourquoi de nombreuses méthodes sont proposées pour traiter ces résidus.

Pour les mâchefers, on peut améliorer la quasi-vitrification en optimisant la trajectoire thermique des mâchefers, par exemple avec un brûleur d'appoint et des dispositifs de trempe lente. Toutefois ces dispositifs sont coûteux et complexes, ce qui limite leur utilisation. Les mâchefers sont broyés/criblés, après déféraillage dans le cas de l'incinération d'ordures ménagères, pour produire, d'une part, un matériau valorisable en soubassement routier ou dans la construction et, d'autre part, des fines qui doivent en général être traitées comme les cendres volantes, car elles concentrent les défauts de qualité des mâchefers, et peuvent être d'une granulométrie comparable.

Pour les cendres volantes on a proposé de les injecter, éventuellement après un traitement approprié, dans le procédé de combustion de manière à les fondre dans les mâchefers. Cette méthode est évidement intéressante pour réduire les imbrûlés mais elles conduit automatiquement à un enrichissement considérable en éléments volatilisables dans le procédé de combustion. Il est alors nécessaire de maintenir une sortie cendre volante, beaucoup plus concentrée en éléments volatilisables et qui doit être traitée. Il a été aussi proposé de traiter ces cendres volantes avant injection. Par exemple dans la demande de brevet FR-A-2 547 210 (KERNFORSCHUNGSZENTRUM KARLSRUHE GmbH), les cendres volantes sont lixiviées avec la purge acide du laveur humide placé immédiatement en aval d'un électrofiltre pour l'épuration des fumées. Dans le brevet EP-B-0381601 (LAB S.A.), une lixiviation forcée est réalisée dans un dispositif intégré à l'un des circuits hydrauliques du laveur humide assurant la captation et la neutralisation des gaz acides des fumées. Dans ces deux cas, la plus grande partie de la fraction soluble peut être séparée et les cendres ainsi traitées n'entraînent plus une volatilisation aussi importante lorsqu'elles sont injectées dans le processus de combustion. Toutefois les critères de température et de temps de séjour qu'exige une bonne fusion des cendres ne peuvent souvent pas être satisfaits en même temps que les critères qu'exigent une bonne combustion, ainsi que des coûts raisonnables sans complexité technique excessive. De plus, la qualité des mâchefers est limitée par la nécessité de peu volatiliser les éléments volatilisables qui n'ont pas été éliminés lors du traitement avant injection, sinon il est nécessaire de maintenir une sortie de cendre volante.

Il a aussi été proposé de réaliser le traitement thermique des cendres volantes dans un four séparé du processus de combustion. Cette méthode permet d'atteindre les conditions optimales pour le traitement thermique des cendres sans tenir compte des critères propres au processus de combustion. Elle permet aussi une meilleure destruction des composés organiques résiduels. Et les fumées issues de ce four sont soit épurées séparément, ce qui conduit à d'autres résidus à traiter, soit renvoyées en tête de l'épuration des famées dont l'enrichissement en éléments volatilisables doit être limité par une sortie cendre volante.

Il a enfin été proposé de réaliser le traitement thermique en volatilisant le plus possible les métaux lourds pour que le résidu ainsi traité ait une teneur très faible en Ces éléments. L'inconvénient de cette voie est, d'une part, de ne pas pouvoir extraire de manière suffisante tous les métaux lourds et, d'autre part, de générer un résidu comprenant des métaux lourds mais aussi beaucoup d'autres éléments volatifisés lors du traitement thermique visant à extraire les métaux lourds.

### SOMMAIRE DE L'INVENTION

La présente invention vise à supprimer les inconvénients des méthodes connues et à imbriquer judicieusement le traitement thermique des résidus d'un processus industriel (y compris des résidus de l'épuration des fumées générées par ce processus) avec un traitement physico-chimique des résidus, en amont, et une épuration des famées générées par ce traitement thermique, en aval.

Elle est particulièrement intéressante lorsque l'épuration des famées du processus industriel comporte une épuration humide des famées générées par ce processus industriel, car cette épuration humide des fumées comporte un traitement de l'effluent liquide qui peut être facilement adapté aux besoins du dit traitement physico-chimique des résidus ainsi que du dit traitement des fumées générées par le dit traitement thermique.

Au sens de la présente invention on entend par traitement thermique de résidus, un traitement dans lequel les résidus à traiter sont portés à une température telle que se produisent des phénomènes de nature physique et/ou chimique. Ces phénomènes peuvent être par exemple la fusion des résidus permettant une quasi-vitrification, une réaction chimique entre les résidus à traiter et les additifs mélangés aux résidus, une réaction chimique entre les résidus et un gaz porteur, une réaction chimique détruisant les composés organiques contenus dans les résidus, par exemple les dioxines et furannes, ... etc. Les résidus sont portés à la température requise soit par des moyens indirects, par exemple chauffage par induction, ... etc, soit par des moyens directs, par exemple brûleur gaz, brûleur gaz dopé à l'oxygène, torche à plasma, four à arc, cubilot, lit fluidisé circulant ou statique (alimenté en air ou fumées chaudes), lit fluidisé avec combustion d'un combustible pulvérulent mélangé aux résidus à traiter, lit fluidisé avec combustion des imbrûlés contenus dans les résidus, ... etc.

Le procédé de traitement thermique objet de la présente invention vise à rendre inerte les résidus, c'est-à-dire sous une forme stable inorganique oxydée en réduisant la fraction organique, notamment les polluants trace tels que les dioxines et les furannes, et en immobilisant les métaux lourds dans la matrice du résidu traité ou en les extrayant des résidus. Pour cela ledit procédé de traitement thermique de résidus provenant d'un processus industriel, notamment d'un processus de combustion, y compris de résidus provenant de l'épuration des famées générées par ledit processus industriel, comporte, d'une part, une étape de traitement thermique et, d'autre part, en aval de ladite étape de traitement thermique, une étape de traitement des fumées générée par : traitement thermique et, cii amont, une étape de traitement physico-chimique des résidus avant traitement thermique. Ces trois étapes sont combinées judicieusement comme indiqué ci-après et elles présentent les caractères spécifiques suivants :
a) dans le traitement physico-chimique :
   - les résidus, sous forme de poussières, provenant du dépoussiérage des fumées générées par ledit traitement thermique, suivant c) ci-après, peuvent être traités suivant ledit traitement physico-chimique et, les résidus à traiter provenant du dit processus industriel sont traités soit en totalité, soit partiellement, soit pas du tout, suivant ledit traitement physico-chimique.
   - les résidus à traiter suivant ledit procédé physico-chimique sont soumis, d'une manière en soi connue, à une lixiviation forcée en phase aqueuse, puis filtrés et rincés.
   - la phase aqueuse résultante est soumise, d'une manière en soi connue, à un traitement de neutralisation/précipitation produisant une eau épurée contenant des sels neutres, essentiellement des chlorures, et un gâteau de filtration contenant sous forme oxydée, hydroxyde ou carbonate, des éléments préalablement dissous tels que les métaux lourds.
b) dans le traitement thermique :
   - lesdits résidus filtrés et rincés et lesdits gâteaux de filtration suivant a) ci-dessus sont envoyés au traitement thermique avec adjonction éventuelle d'additifs facilitant le traitement thermique. Les résidus à traiter provenant du dit processus industriel et non déjà traités suivant ledit traitement physico-chimique sont envoyés au dit traitement thermique.
   - les fumées générées par ledit traitement thermique, qu'elles proviennent d'une combustion et/ou d'un gaz porteur, entraînent les éléments volatilisés dans ledit traitement thermique.
   - les fumées sont amenées en fin de traitement thermique à une température appropriée pour la fonction dépoussiérage suivant c) ci-après.
c) dans le traitement des fumées générées par ledit traitement thermique :
   - les fumées sont d'abord dépoussiérées d'une manière en soi connue et les poussières captées sont soit envoyées au dit traitement physico-chimique pour y être traitées et par la suite envoyées au dit traitement thermique, soit valorisées ou mises en décharge lorsqu'un des objectifs du traitement thermique est d'extraire les métaux lourds des résidus à traiter.
   - Les fumées sont ensuite épurées des autres polluants, c'est-à-dire des polluants se trouvant à l'état gazeux à la température à laquelle est effectué ledit dépoussiérage : polluants acides fortement acides tels que HCl, métaux lourds à l'état gazeux tels que Hg, polluants gazeux peu solubles tels que SO₂, Cl₂. Cette épuration est réalisée, de manière en soi connue, en un ou plusieurs étages, par voie sèche ou humide, éventuellement à l'aide d'additifs spécifiques. Cette épuration comporte une ou plusieurs sorties séparées de résidus pour les composés volatilisés dans le traitement thermique et ne pouvant pas être immobilisés efficacement dans la matrice du résidu traité, lors du traitement thermique. Ces résidus spécifiques tels le mercure, le gypse, sont de préférence valorisés. Le ou les liquides de lavage d'étage d'épuration humide sont déconcentrés, après extraction des dits résidus spécifiques, vers le traitement de neutralisation/précipitation suivant a)

L'étape de traitement physico-chimique peut être utilement mise en oeuvre suivant le procédé objet de la demande de brevet FR-A-2 696 955 (LAB S.A.) de manière à optimiser la quantité résiduelle de composés volatilisables lors de l'étape de traitement thermique. Elle peut être aussi utilement combinée avec le traitement d'effluent liquide associée à l'épuration humide des fumées du dit processus industriel, lorsque celui-ci comporte une telle épuration humide des fumées.

Dans une variante du dit procédé de traitement thermique l'étape de traitement thermique comporte, d'une part, une zone réductrice en amont de l'évacuation des fumées, et d'autre part, une zone oxydante en amont de l'évacuation des résidus traités. La zone réductrice peut être nuise en oeuvre au moyen d'un gaz porteur réducteur ou d'additifs, comme du coke, mélangés aux résidus à traiter.

### DESCRIPTION DETAILLEE DE L'INVENTION

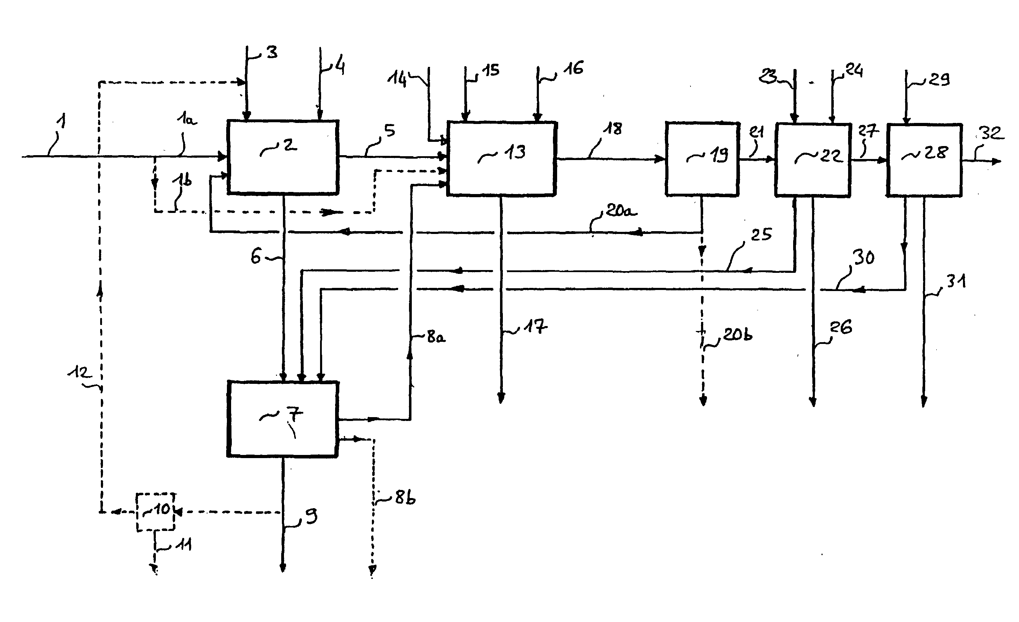

Une meilleure compréhension de l'invention peut être obtenue maintenant grâce à la description détaillée suivante en liaison avec la figure 1 qui donne une représentation schématique du procédé objet de l'invention. Les résidus à traiter (1) sont envoyés (1a) à l'étape de traitement physico-chimique et/ou directement (1b) à l'étape de traitement thermique (13). L'étape de traitement physico-chimique est mise en oeuvre au moyen de deux sous-ensembles (2) et (7). Dans le sous-ensemble (2) les résidus sont soumis, d'une manière en soi connue, à une lixiviation forcée en phase aqueuse, puis filtrés et rincés. Le sous-ensemble 2 reçoit un appoint d'eau (3) et éventuellement des additifs (4) pour optimiser le résultat de la lixiviation. Les résidus ainsi traités (5) sont envoyés à l'étape de traitement thermique (13). L'effluent liquide (6) provenant du sous-ensemble (2) est envoyé à un sous-ensemble de traitement (7) où il est soumis, d'une manière en soi connue, à un traitement de neutralisation/précipitation produisant une eau épurée (9) et un gâteau de filtration (8a) contenant sous forme oxydée, hydroxyde ou carbonate, des éléments inorganiques dissous dans le sous-ensemble (2), tels que les métaux lourds. Ce gâteau de filtration contient aussi des composés organiques. Dans une variante préférée, il est utile d'extraire sélectivement (8b) la plus grande partie possible d'un composé volatilisable au cours du traitement thermique décrit ci-après et par exemple dans le cas d'un traitement thermique à haute température, les sulfates sont utilement extraits sous forme de gypse valorisable (8b), de manière à limiter la volatilisation de SO₂. L'eau épurée (9) contient des sels neutres, essentiellement des chlorures de sodium et de calcium. Dans la plupart des cas, cette eau peut être émise dans le milieu aquatique; dans certains cas, ceci n'est pas possible et l'eau épurée (9) doit être évaporée (10) pour produire un sel (11), réutilisable dans l'industrie chimique par exemple, et de l'eau (12) réutilisable en substitution de l'eau d'appoint (3).

Ces dispositions permettent, d'une part, de séparer des résidus (1) une part importante des composés volatilisables en solubilisant les métaux lourds solubles et en les mettant sous une forme oxydée, carbonate ou hydroxyde, favorable à leur immobilisation dans la matrice des résidus traités et, d'autre part, d'extraire les sels neutres solubles, essentiellement les chlorures qui, s'ils n'étaient extraits efficacement en amont, devraient être volatilisés lors du traitement thermique pour que la qualité des résidus traités soit satisfaisante et conservée au cours du temps.

De cette manière les composés volatilisés lors du traitement thermique (13) sont en quantités limitées et les poussières recueillies par le dépoussiéreur (19) dépoussiérant les fumées (18) générées par le traitement thermique (13) peuvent être renvoyées (20a) au sous-ensemble (2) pour être soumises à ladite étape de traitement physico-chimique et ainsi aboutir à l'immobilisation de ces composés sous forme oxydée dans la matrice des résidus traités (17).

Dans une variante préférée non représentée sur la figure 1, l'effluent liquide (6) au lieu d'être traité dans un sous-ensemble spécifique peut être utilement traité dans le système de traitement de l'effluent liquide associé à l'épuration humide des fumées provenant du dit processus industriel lorsqu'un telle épuration humide existe. Les gâteaux de filtration provenant du dit système de traitement de l'effluent liquide sont envoyés à l'étape de traitement thermique.

Le traitement thermique (13) reçoit d'une part les résidus traités (5) et (8a) provenant des sous-ensembles (2) et (7) de l'étape de traitement physico-chimique et d'autre part des résidus (1b) non soumis à cette étape, ainsi que des additifs (14), ces flux (1b) et (14) étant déterminés pour que la composition moyenne corresponde aux exigences du traitement thermique. Par exemple si une fusion/vitrification est recherchée, le flux d'additifs (14) peut comporter une adjonction de silice ou de matériau siliceux pour que la composition moyenne satisfasse aux exigences de vitrification/fusion compte-tenu de la composition des résidus à traiter dans le cas considéré.

L'ensemble des matières à traiter est portée à la température requise par des moyens non représentés. Ces moyens peuvent être indirects, par exemple chauffage par induction, ou directs, par exemple brûleur gaz, brûleur gaz dopé à l'oxygène, torche à plasma, four à arc, cubilot, lit fluidisé circulant ou statique alimenté en air ou fumées chaudes, lit fluidisé avec combustion d'un combustible pulvérulent mélangé aux résidus à traiter, lit fluidisé avec combustion des imbrûlés contenus dans les résidus à traiter, ... etc. Si ledit moyen n'apporte pas un débit de fumées suffisant pour entraîner les éléments volatilisés, un gaz porteur oxydant (15), par exemple de l'air, est introduit, en quantité suffisante pour entraîner les éléments volatilisés dans le cas considéré.

Dans le cas de l'incinération d'ordures ménagères, les cendres volantes collectées dans un électrofiltre, placé en aval de la chaudière, ne nécessitent souvent pas d'additifs, leur composition moyenne pouvant satisfaire aux critères de fusion/vitrification dans une plage de température de 1300° à 1600°C, maintenue pendant une durée d'au moins trente minutes. Si l'on utilise un four à arc, un léger débit d'air est nécessaire (15) et peut être utilisé pour introduire pneumatiquement les résidus dans le four à arc. Pour ces mêmes cendres volantes un objectif de destruction des dioxines et furannes et de simple agglomération des plus fines pourra être atteint avec un lit fluidisé recevant des cendres traitées provenant de l'étape de traitement physico-chimique et les portant à une température de 800 à 900°C, maintenue pendant une durée d'au moins trente minutes.

Dans une variante du dit traitement thermique, une atmosphère réductrice est maintenue dans une zone du dit traitement thermique en amont de l'évacuation des fumées, zone dans laquelle les résidus à traiter sont introduits. Cette atmosphère réductrice peut être créée par l'introduction d'un gaz porteur réducteur (16) ou par une combustion réductrice, dans ladite zone, par exemple de coke introduit comme additif (14) et mélangé aux résidus à traiter, alors que la combustion de ce même combustible est oxydante dans la zone en amont de l'évacuation des résidus traités, zone dans laquelle est injecté de l'air (15) de préférence préchauffé ; ceci peut être mis en oeuvre avec un arrangement de type cubilot.

Les fumées (18) générées par le traitement thermique sont envoyées à l'étape de traitement des fumées mise en oeuvre dans plusieurs sous-ensembles spécifiques. Dans le sous-ensemble (19) les fumées (18) sont dépoussiérées, par des moyens en soi connus, c'est-à-dire que sont séparés les composés à l'état particulaire à la température des dites fumées dans ledit dépoussiéreur (19).

Cette température est ajustée par des moyens non représentés, en soi connus, tels que la conception du traitement thermique ou par un échangeur ou par une injection d'air, ... etc. La valeur requise pour cette température est différente de celle requise pour ledit traitement thermique. Elle est fixée à un niveau plus bas, pour que les composés volatilisés dans ledit traitement thermique et qui ne peuvent pas être efficacement immobilisé lors dudit traitement thermique dans la matrice des résidus traités (17), ne soient pas ou soient peu captés dans le dépoussiéreur (19). Les poussières captées peuvent alors être utilement renvoyées (20a) à l'étape de traitement physico-chimique. Cette disposition de dépoussiérage sélectif des composés volatilisés dans le traitement thermique est rendue possible par l'étape de traitement physico-chimique qui minimise quantitativement les composés volatilisables, en particulier les chlorures.

Dans l'exemple du traitement des cendres volantes d'incinération d'ordures ménagères, l'étape de traitement physico-chimique peut réduire la concentration en chlorures de typiquement 20% à moins de 1% en poids des cendres. En fixant la température du dépoussiérage (19) à 200 - 250°C, le mercure, qui ne peut être immobilisé efficacement en vitrification/fusion compte-tenu des propriétés particulières du mercure et de ses composés, reste à l'état gazeux et est capté dans l'épuration des fumées en aval du dépoussiéreur (19) et peut être valorisé, alors que les autres métaux lourds sont captés dans le dépoussiéreur (19). Il est à noter que la séparation sélective du mercure est théoriquement possible dans l'étape de traitement physico-chimique. mais n'est pas pratiquement possible en raison des concentrations élevées de nombreux composés et des effets de colmatage des moyens de séparation sélective tels que des résines spécifiques.

Les fumées dépoussiérées (21) sont ensuite épurées des autres polluants, c'est-à-dire des polluants se trouvant à l'état gazeux à la température des fumées dans le dépoussiéreur (19). Les fumées sont ensuite épurées à la façon en soi connue, par voie sèche ou humide.

Dans une variante préférée les fumées dépoussiérées (21) sont envoyées dans le sous-ensemble (22) d'épuration par voie humide. Le liquide de lavage est maintenu à un pH acide (dans l'exemple ci-avant pH < 1,5) par injection d'acide (23) (par exemple acide chlorhydrique) lorsque les fumées n'apportent pas une acidité suffisante. L'appoint d'eau nécessaire à l'épuration humide n'est pas représentée. Cette épuration humide assure, d'une manière en soi connue, la captation des polluants acides fortement solubles ainsi que la captation, éventuellement avec une addition d'additifs spécifiques (24) des métaux lourds à l'état gazeux, notamment le mercure. Ledit liquide de lavage est déconcentré (25) vers le sous-ensemble (7) de neutralisaiton/précipitation après que les métaux lourds captés, notamment le mercure, aient été extraits du dit liquide de lavage, par exemple en retirant du liquide de lavage la poudre de charbon actif utilisée comme additif spécifique (24) : le résidu (26) concentre ces métaux lourds.

Lorsque le traitement thermique génère des polluants gazeux non captés dans ledit premier étage (22) de traitement humide, les fumées (27) sont ensuite soumises à un deuxième étage (28) de traitement humide dans le liquide de lavage est maintenu à un niveau de pH assurant, d'une manière en soi connue, la captation du SO₂ et d'autres polluants gazeux tels que le chlore gazeux pouvant être émis lors du traitement thermique ; ce second traitement humide est réalisé en mono-alcalin avec addition (29) de chaux ou en bi-alcalin avec adjonction (29) de chaux ou de calcaire pour produire, d'une manière en soi connue, du gypse (31) valorisable et un effluent liquide (30) envoyé au sous-ensemble (7) de neutralisation/précipitation. Les fumées ainsi traitées (32). compte-tenu de leur faible volume, peuvent être utilement injectées dans l'installation d'épuration des fumées provenant du dit processus industriel.

Dans une autre variante l'épuration des fumées dépoussiérées (21) comporte un premier étage d'épuration humide semblable au sous-ensemble (28) décrit ci-dessus qui est suivi par un étage d'adsorption sur de la poudre de charbon actif mise en suspension dans les fumées préalablement désaturées (réacteur circulant) et filtrée (filtre à manche) pour la captation des métaux lourds gazeux tels que le mercure.

## Revendications

1. Procédé de traitement thermique de résidus provenant d'un processus industriel, notamment d'un processus de combustion, y compris de résidus provenant de l'épuration des fumées générées par ledit processus industriel, comportant une étape de traitement thermique et, en aval de ladite étape de traitement thermique, une étape de traitement des fumées générées par ledit traitement thermique et, en amont une étape de traitement physico-chimique des résidus avant traitement thermique, **caractérisé en ce que** :
a) dans le traitement physico-chimique :
- les résidus, sous forme de poussières, provenant du dépoussiérage des fumées générées par ledit traitement thermique ci-après, peuvent être traités suivant ledit traitement physico-chimique et les résidus à traiter provenant dudit processus industriel sont traités soit en totalité, soit partieltement, suivant ledit traitement physico-chimique
- les résidus sont soumis, d'une manière en soi connue, à une lixiviation forcée en phase aqueuse, puis filtrés et rincés ;
- la phase aqueuse résultante est soumise à un traitement de neutralisation/précipitation produisant une eau épurée contenant des sels neutres, essentiellement des chlorures, et un gâteau de filtration contenant sous forme oxydée, hydroxyde ou carbonate, des éléments préalablement dissous tels que les métaux lourds ;
b) dans le traitement thermique :
- lesdits résidus filtrés et rincés et lesdits gâteaux de filtration suivant a) ci-dessus sont envoyés au traitement thermique avec adjonction éventuelle d'additifs facilitant le traitement thermique ; les résidus à traiter provenant dudit processus industriel et non déjà traités suivant ledit traitement physico-chimique sont envoyés audit traitement thermique
- ledit traitement thermique génère une matrice des résidus traités substantiellement constituée par les éléments non votatilisés par ledit traitement thermique ; cette matrice est évacuée de la zone du traitement thermique
- les fumées générées par ledit traitement thermique, qu'elles proviennent d'une combustion et/ou d'un gaz porteur, entraînent les éléments volatilisés dans ledit traitement thermique,
- les fumées sont amenées en fin de traitement thermique à une température appropriée pour la fonction dépoussiérage suivant c) ci-après
c) dans le traitement des fumées générées par ledit traitement thermique:
- les fumées sont d'abord dépoussiérées et les poussières captées sont soit envoyées audit traitement physico-chimique pour y être traitées et par la suite envoyées audit traitement thermique, soit valorisées ou mises en décharge lorsqu'un des objectifs du traitement thermique est d'extraire les métaux lourds des résidus à traiter ;
- les fumées sont ensuite épurées des autres polluants, c'est-à-dire des polluants se trouvant à l'état gazeux à la température à laquelle est effectué ledit dépoussiérage, notamment des métaux lourds tels que le mercure; cette épuration est réalisée en un ou plusieurs étages, par voie sèche ou humide, éventuellement à l'aide d'additifs spécifiques : cette épuration comporte une ou plusieurs sorties séparées de résidus pour les composés volatilisés dans ledit traitement thermique et ne pouvant pas être immobilisés efficacement dans la matrice du résidu traité, lors dudit traitement thermique ; ces résidus spécifiques tels que le mercure, le gypse, sont de préférence valorisés ; le ou les liquides de lavage d'étage d'épuration humide sont déconcentrés, après extraction desdits résidus spécifiques, vers le traitement de neutralisation/précipitation suivant a).

2. Procédé suivant la revendication 1, **caractérisé en ce que** dans l'étape c) de traitement des fumées générées par ledit traitement thermique, l'épuration des fumées en aval du dépoussiérage est réalisée par voie humide en un ou deux étages :
- les fumées sont soumises à une première étape de traitement humide dont le liquide de lavage est maintenu à un pH acide par une addition d'acide lorsque les fumées n'apportent pas une acidité suffisante ; ce traitement humide assure la captation des polluants acides fortement solubles ainsi que la captation, éventuellement avec une addition d'additifs spécifiques, des métaux lourds, notamment du mercure, se trouvant à l'état gazeux à la température à laquelle est effectué ledit dépoussiérage ; ledit liquide de lavage est déconcentré vers le traitement de neutralisation/précipitation suivant a) après qu'ont été extraits dudit liquide de lavage les métaux lourds captés et notamment le mercure ;
- lorsque le traitement thermique génère des polluants gazeux non captés dans ladite première étape de traitement humide, les fumées sont ensuite soumises à une deuxième étape de traitement humide dont le liquide de lavage est maintenu à un niveau de pH assurant la captation du SO₂ et d'autres polluants gazeux tels que le chlore gazeux pouvant être émis lors du traitement hermique ; ce second traitement humide est réalisé en mono-alcalin avec addition de chaux ou en biaicatin avec adjonction de chaux ou de calcaire pour produire du gypse valorisable et un effluent liquide envoyé au traitement de neutralisation/précipitation suivant a).

3. Procédé suivant la revendication 1, **caractérisé en ce que**, dans l'étape c) de traitement des fumées générées par ledit traitement thermique, l'épuration des fumées en aval du dépoussiérage comporte un étage d'adsorption du mercure sur une poudre de charbon actif mise en suspension dans les fumées et séparée en aval par filtration.

4. Procédé suivant la revendication 1 ou 2 ou 3, **caractérisé en ce que** l'épuration des fumées générées par ledit processus industriel comporte un étage d'épuration humide avec un système de traitement de l'effluent liquide et **en ce que**, dans l'étape de traitement physico-chimique, ledit traitement de neutralisation/précipitation est réalisé en envoyant ladite phase aqueuse résultant de la lixiviation forcée dans ledit système de traitement de l'effluent liquide et en envoyant la totalité du gâteau de filtration qui en résulte audit traitement thermique.

5. Procédé suivant la revendication 1 ou 2 ou 3 ou 4, **caractérisé en ce que**, dans l'étape de traitement thermique, les résidus en cours de traitement sont portés, en vue d'une fusion/vitrification, à une température située dans la plage 1300 à 1600°C maintenue sur une durée d'au moins trente minutes.

6. Procédé suivant la revendication 1 ou 2 ou 3 ou 4 **caractérisé en ce que**, dans l'étape du traitement thermique, les résidus en cours de traitement sont portés, en vue de la destruction des dioxines et furannes et d'une simple agglomération des particules les plus fines, à une température située dans la plage 800 à 900°C maintenue sur une durée d'au moins trente minutes.

7. Procédé suivant la revendication 1 ou 2 ou 3 ou 5 ou 6, **caractérisé en ce que**, dans l'étape d'épuration des fumées, le dépoussiérage est effectué sur des fumées sont la température est située dans la plage 200 à 250°C.

8. Procédé suivant la revendication 7, **caractérisé en ce que**, dans l'étape d'épuration des fumées, les poussières captées dans le dépoussiérage sont envoyées en totalité audit traitement physico-chimique pour y être traitées et par la suite envoyées audit traitement thermique.

9. Procédé suivant la revendication 1, **caractérisé en ce que** la totalité des résidus provenant dudit processus industriel, y compris les résidus provenant de l'épuration des fumées générées par ledit processus industriel, sont traités suivant ledit traitement physico-chimique.

10. Procédé suivant la revendication 1 ou 2 ou 3 ou 4, **caractérisé en ce que**, dans l'étape de traitement physico-chimique, les sulfates sont extraits sélectivement sous forme de gypse valorisable.

## Claims

1. A process for heat-treating residues from an industrial process, in particular a combustion process, including residues from the purification of waste gases generated by said industrial process, comprising a heat treatment stage and, downstream of said heat treatment stage, a stage comprising treatment of the waste gases generated by said heat treatment and, upstream, a stage involving physico-chemical treatment of the residues prior to heat treatment, **characterised in that**:
a) in the physico-chemical treatment:
- the residues, in the form of dusts, stemming from dedusting of the waste gases generated by said heat treatment below, may be treated by said physico-chemical treatment and the residues to be treated stemming from said industrial process are treated either fully or partially by said physico-chemical treatment,
- the residues are subjected, in a manner known per se, to enforced aqueous phase lixiviation, then filtered and rinsed,
- the resultant aqueous phase is subjected to neutralisation/precipitation treatment producing purified water containing neutral salts, substantially chlorides, and a filter cake containing previously dissolved elements such as heavy metals in oxidised, hydroxide or carbonate form;
b) in the heat treatment:
- said filtered and rinsed residues and said filter cakes according to a) above are sent to the heat treatment with the possible addition of additives facilitating heat treatment; the residues to be treated stemming from said industrial process and not already treated by said physico-chemical treatment are sent to said heat treatment
- said heat treatment generates a matrix of treated residues consisting substantially of the elements which have not been volatilised by said heat treatment; this matrix is evacuated from the heat treatment zone
- the waste gases generated by said heat treatment, whether they originate from combustion and/or from a carrier gas, entrain the volatilised elements into said heat treatment,
- at the end of the heat treatment, the waste gases are brought to a temperature appropriate for the dedusting operation according to c) below
c) in the treatment of the waste gases generated by said heat treatment:
- the waste gases are firstly dedusted and the captured dusts are either sent to said physico-chemical treatment to be treated there and then sent to said heat treatment or reutilised or landfilled when one of the objectives of the heat treatment is to extract the heavy metals from the residues to be treated;
- the waste gases are then purified of other contaminants, that is to say contaminants in the gaseous state at the temperature at which said dedusting is performed, in particular heavy metals such as mercury; this purification is performed in one or more stages, under dry or wet conditions, optionally with the aid of specific additives; this purification comprises one or more separate residue outlets for the compounds volatilised in said heat treatment and not able to be effectively immobilised in the matrix of treated residue at the time of said heat treatment; these specific residues such as mercury, gypsum, are preferably reutilised; the washing liquid or liquids from the wet purification stage are deconcentrated, after extraction of said specific residues, on the way to the neutralisation/precipitation treatment according to a).

2. A process according to claim 1, **characterised in that** in stage c), involving treatment of the waste gases generated by said heat treatment, purification of the waste gases downstream of the dedusting is performed under wet conditions in one or two stages:
- the waste gases are subjected to a first wet treatment stage in which the washing liquid is kept at an acid pH by the addition of acid when the waste gases do not provide sufficient acidity; this wet treatment ensures the capture of highly soluble acid contaminants together with the capture, optionally with the addition of specific additives, of the heavy metals, in particular mercury, in the gaseous state at the temperature at which said dedusting is performed; said washing liquid is deconcentrated on the way to the neutralisation/precipitation treatment according to a) after the heavy metals captured, in particular mercury, have been extracted from said washing liquid;
- when the heat treatment generates gaseous contaminants not captured in said first wet treatment stage, the waste gases are then subjected to a second wet treatment stage, in which the washing liquid is kept at a pH level ensuring the capture of SO₂ and other gaseous contaminants such as gaseous chlorine which may be emitted during heat treatment; this second wet treatment is performed under mono-alkaline conditions with the addition of lime or under bialkaline conditions with the addition of lime or limestone to produce reutilisable gypsum and a liquid effluent sent to the neutralisation/precipitation treatment according to a).

3. A process according to claim 1, **characterised in that**, in stage c) involving treatment of the waste gases generated by said heat treatment, purification of the waste gases downstream of the dedusting comprises a stage involving the adsorption of mercury on an activated carbon powder suspended in the waste gases and separated downstream by filtration.

4. A process according to claim 1 or 2 or 3, **characterised in that** purification of the waste gases generated by said industrial process comprises a wet purification stage with a liquid effluent treatment system and **in that**, in the physico-chemical treatment stage, said neutralisation/precipitation treatment is performed by sending said aqueous phase resulting from the enforced lixiviation to said liquid effluent treatment system and by sending all the filter cake resulting therefrom to said heat treatment.

5. A process according to claim 1 or 2 or 3 or 4, **characterised in that**, in the heat treatment stage, the residues being treated are brought, with a view to fusion/vitrification, to a temperature in the range from 1300 to 1600°C, which is maintained for a period of at least thirty minutes.

6. A process according to claim 1 or 2 or 3 or 4, **characterised in that**, in the heat treatment stage, the residues being treated are brought, with a view to destroying dioxins and furans and producing simple agglomeration of the finest particles, to a temperature in the range from 800 to 900°C, which is maintained for a period of at least thirty minutes.

7. A process according to claim 1 or 2 or 3 or 5 or 6, **characterised in that**, in the waste gas purification stage, dedusting is performed on waste gases whose temperature is in the range from 200 to 250°C.

8. A process according to claim 7, **characterised in that**, in the waste gas purification stage, the dusts captured during dedusting are sent in their totality to said physico-chemical treatment to be treated there and then sent to said heat treatment.

9. A process according to claim 1, **characterised in that** all the residues stemming from said industrial process, including the residues stemming from purification of the waste gases generated by said industrial process, are treated by said physico-chemical treatment.

10. A process according to claim 1 or 2 or 3 or 4, **characterised in that**, in the physico-chemical treatment stage, the sulfates are extracted selectively in the form of reutilisable gypsum.

## Patentansprüche

1. Verfahren zur Wärmebehandlung von Rückständen aus einem Industrieprozess, insbesondere einem Verbrennungsprozess, inklusive der Rückstände, die von der Reinigung der durch diesen Industrieprozess erzeugten Abgase stammen, umfassend eine Etappe der Wärmebehandlung und im Nachlaufbereich der Etappe der Wärmebehandlung eine Etappe der Behandlung der durch die Wärmebehandlung erzeugten Abgase und im Vorlaufbereich eine Etappe der physikalisch-chemischen Behandlung der Rückstände vor der Wärmebehandlung, **dadurch gekennzeichnet dass**:
a) bei der physikalisch-chemischen Behandlung:
- die Rückstände in Form von Staub, die von der Entstaubung der von der nachstehenden Wärmebehandlung erzeugten Abgase stammen, nach der physikalisch-chemischen Behandlung behandelt werden können, und die zu behandelnden Rückstände, die von dem Industrieprozess stammen, entweder zur Gänze oder teilweise nach der physikalisch-chemischen Behandlung behandelt werden.
- die Rückstände auf an sich bekannte Weise einer gesteuerten Entlaugung in wässeriger Phase unterzogen, dann gefiltert und gespült werden:
- die entstandene wässerige Phase einer Behandlung der Neutralisierung/Niederschlagung unterzogen wird, die ein gereinigtes Wasser, das neutrale Salze, insbesondere Chloride, enthält, und einen Filterkuchen erzeugt, der in oxydierter Form, Hydroxid oder Karbonat, vorher gelöste Elemente, wie die Schwermetalle, enthält:
b) bei der Wärmebehandlung:
- die gefilterten und gespülten Rückstände und die Filterkuchen nach a) im Obenstehenden in die Wärmebehandlung geschickt werden, wobei eventuell Zusätze beigesetzt werden, die die Wärmebehandlung erleichtern; die zu behandelnden Rückstände, die von dem Industrieprozess stammen und nicht bereits nach der physikalisch-chemischen Behandlung behandelt wurden, in die Wärmebehandlung geschickt werden,
- die Wärmebehandlung eine Matrix der behandelten Rückstände erzeugt, die im wesentlichen von den nicht durch die Wärmebehandlung verflüchtigten Elementen gebildet wird; diese Matrix aus dem Wärmebehandlungsbereich beseitigt wird,
- die von der Wärmebehandlung erzeugten Abgase unabhängig davon, ob sie von einer Verbrennung und/oder einem Trägergas stammen, die in der Wärmebehandlung verflüchtigten Elemente mitnehmen,
- die Abgase am Ende der Wärmebehandlung auf eine entsprechende Temperatur für die Entstaubungsfunktion nach c) im nachstehenden gebracht werden,
c) bei der Behandlung der von der Wärmebehandlung erzeugten Abgase:
- die Abgase zuerst entstaubt werden und der erfasste Staub in die physikalisch-chemische Behandlung geschickt wird, um hier behandelt zu werden, und in der Folge in die Wärmebehandlung geschickt oder verwertet oder entsorgt wird, wenn eines der Ziele der Wärmebehandlung darin besteht, die Schwermetalle aus den zu behandelnden Rückständen zu entziehen.
- die Abgase sodann von den anderen Schadstoffen gereinigt werden, d.h. von den Schadstoffen, die sich im gasförmigen Zustand bei der Temperatur befinden, bei der die Entstaubung, insbesondere der Schwermetalle wie des Quecksilbers, stattfindet; diese Reinigung in einer oder mehreren Stufen auf trockenem oder feuchtem Wege, eventuell mit Hilfe spezifischer Zusätze, besteht; diese Reinigung einen oder mehrere getrennte Ausgänge für Rückstände für die bei der Wärmebehandlung verflüchtigten Verbindungen umfasst, die in der Matrix des behandelten Rückstandes bei der Wärmebehandlung nicht wirksam festgesetzt werden können: diese spezifischen Rückstände wie Quecksilber, Gips, vorzugsweise aufgewertet werden: die Waschflüssigkeit(en) der Stufe der Feuchtreinigung dekonzentriert werden und nach Entziehen der spezifischen Rückstände der Behandlung der Neutralisierung/Niederschlagung nach a) zugeführt werden.

2. Verfahren nach Anspruch 1, **dadurch gekennzeichnet, dass** in der Etappe c) der Behandlung der Abgase, die von der Wärmebehandlung erzeugt wurden, die Reinigung der Abgase im Nachlaufbereich der Entstaubung auf feuchtem Wege in einer oder zwei Stufen erfolgt:
- die Abgase werden einer ersten Stufe der Feuchtreinigung unterzogen, deren Waschflüssigkeit auf einem sauren pH-Wert durch Beigabe einer Säure gehalten wird, wenn die Abgase keine ausreichenden Säureeigenschaften mitbringen; diese Feuchtreinigung gewährleistet die Erfassung der gut löslichen sauren Schadstoffe sowie die Erfassung der Schwermetalle, insbesondere des Quecksilbers, die sich bei der Temperatur, bei der die Entstaubung erfolgt, im gasförmigen Zustand befinden, eventuell unter Beigabe von spezifischen Zusätzen: die Waschflüssigkeit wird dekonzentriert zu der Teileinheit zur Neutralisierung/Niederschlagung gemäß a), nachdem die erfassten Schwermetalle, insbesondere das Quecksilber, aus der Waschflüssigkeit entzogen wurden:
- wenn die Wärmebehandlung gasförmige Schadstoffe erzeugt, die in der ersten Stufe der Wärmebehandlung nicht erfasst wurden, werden die Abgase sodann einer zweiten Stufe der Feuchtbehandlung unterzogen, deren Waschflüssigkeit auf einem pH-Wert gehalten wird, der die Erfassung des S02 und anderer gasförmiger Schadstoffe, wie beispielsweise des gasförmigen Chlors, gewährleistet, das bei der Wärmebehandlung freigesetzt werden kann; diese zweite Feuchtbehandlung erfolgt monoalkalisch unter Beigabe von Kalk oder bialkalisch unter Beigabe von Kalk oder Kalkstein, um einen verwertbaren Gips und Flüssigabgänge zu erzeugen, die zu der Teileinheit zur Neutralisierung/Niederschlagung gemäß a) geschickt werden.

3. Verfahren nach Anspruch 1, **dadurch gekennzeichnet, dass** in der Etappe c) der Behandlung der Abgase, die durch die Wärmebehandlung erzeugt werden, die Reinigung der Abgase im Nachlaufbereich der Entstaubung eine Stufe der Adsorption des Quecksilbers auf einem Aktivkohlepulver umfasst, das in den Abgasen aufgeschlämmt und im Nachlaufbereich durch Filterung abgespalten wurde.

4. Verfahren nach Anspruch 1, 2 oder 3, **dadurch gekennzeichnet, dass** die Reinigung der Abgase, die von dem Industrieprozess erzeugt wurden, eine Stufe der Feuchtreinigung mit einem System zur Behandlung der Flüssigabgänge umfasst, und dass in der Etappe der physikalisch-chemischen Behandlung die Behandlung der Neutralisierung/Niederschlagung verwirklicht wird, indem die wässerige Phase, die sich aus der gesteuerten Entlaugung ergibt, in das System zur Behandlung der Flüssigabgänge geschickt wird und indem der gesamte Filterkuchen, der sich daraus ergibt, in die Wärmebehandlung geschickt wird.

5. Verfahren nach Anspruch 1, 2, 3 oder 4, **dadurch gekennzeichnet, dass** in der Etappe der Wärmebehandlung die Rückstände während der Behandlung für eine Verschmelzung/Verglasung auf eine Temperatur gebracht werden, die im Bereich von 1300 bis 1600 °C liegt und über eine Dauer von mindestens dreißig Minuten aufrechterhalten wird.

6. Verfahren nach Anspruch 1, 2, 3 oder 4, **dadurch gekennzeichnet, dass** in der Etappe der Wärmebehandlung die Rückstände während der Behandlung für die Zerstörung der Dioxine und Furane und eine einfache Agglomeration der Feinstteilchen auf eine Temperatur im Bereich von 800 bis 900°C gebracht wird, die während einer Dauer von mindestens dreißig Minuten aufrechterhalten wird.

7. Verfahren nach Anspruch 1, 2, 3, 5 oder 6, **dadurch gekennzeichnet, dass** in der Etappe der Abgasreinigung die Entstaubung an Abgasen erfolgt, deren Temperatur im Bereich zwischen 200 und 250 °C liegt.

8. Verfahren nach Anspruch 7, **dadurch gekennzeichnet, dass** in der Etappe der Abgasreinigung die in der Entstaubung erfassten Staubteilchen zur Gänze an die physikalisch-chemische Behandlung geschickt werden, um hier behandelt und sodann an die Wärmebehandlung geschickt zu werden.

9. Verfahren nach Anspruch 1, **dadurch gekennzeichnet, dass** die Gesamtheit der Rückstände, die von dem Industrieprozess stammen. inklusive der Rückstände, die von der Reinigung der Abgase stammen, die von dem Industrieprozess erzeugt wurden, nach der physikalisch-chemischen Behandlung behandelt werden.

10. Verfahren nach Anspruch 1, 2, 3 oder 4, **dadurch gekennzeichnet, dass** in der Etappe der physikalisch-chemischen Behandlung die Sulfate selektiv in Form von verwertbarem Gips entzogen werden.
